# EUROPÄISCHE PATENTSCHRIFT

(11) **EP 2 981 431 B1**
(45) Veröffentlichungstag und Bekanntmachung des Hinweises auf die Patenterteilung: **10.05.2017**
(21) Anmeldenummer: 14714988.4
(22) Anmeldetag: 31.03.2014
(51) Int. Cl.: B60L 3/00, B60L 3/04, B60L 11/18, H02J 7/04, H01M 10/44, H02J 7/00

(54) **VERFAHREN ZUM BETREIBEN EINER LADESTATION MIT LADELEISTUNG ABHÄNGIG VON DER TEMPERATUR DER LADESTATION**
METHOD FOR OPERATING A CHARGING STATION WHEREBY CHARGING CURRENT IS DEPENDENT ON TEMPERATURE OF CHARGING STATION
PROCÉDÉ POUR FAIRE FONCTIONNER UNE STATION DE RECHARGE AVEC COURANT DE CHARGE ETANT DEPENDENT DE LA TEMPÉRATURE DE STATION DE RECHARGE

(30) Priorität: 02.04.2013 DE 102013005507
(43) Veröffentlichungstag der Anmeldung: 10.02.2016
(73) Patentinhaber: RWE AG, 45128 Essen (DE)
(72) Erfinder: BECKER, Gernot, 44269 Dortmund (DE)
(74) Vertreter: Cohausz & Florack
(86) Internationale Anmeldenummer: PCT/EP2014/056405
(87) Internationale Veröffentlichungsnummer: WO 2014/161803

(56) Entgegenhaltungen:
- WO-A1-2012/117743
- WO-A2-2011/127446

## Beschreibung

Der Gegenstand betrifft ein Verfahren zum Betreiben einer Ladestation für Elektrofahrzeuge, bei dem eine Ladeleistung zwischen einem Ladesteuergerät des Elektrofahrzeugs und der Ladestation ausgehandelt wird und das Ladesteuergerät entsprechend der ausgehandelten Ladeleistung einen von der Ladestation an das Elektrofahrzeug übertragenen Ladestrom steuert, wobei eine Dauernennleistung und eine Maximalleistung der Ladestation, die größer ist als die Dauernennleistung ist, bestimmt ist.

Das Aushandeln einer Ladeleistung, insbesondere einer Ladestromstärke zwischen Elektrofahrzeug und Ladestation ist hinlänglich bekannt. Insbesondere bei AC-Ladestationen, die vom Umfang des Gegenstands umfasst sind, wird zumindest zu Beginn eines Ladevorgangs über entsprechende Verfahren eine Ladeleistung ausgehandelt. Das Ladesteuergerät des Elektrofahrzeugs steuert dann die Ladeleistung, respektive den Ladestrom entsprechend der ausgehandelten Ladeleistung. Die Ladestation kann überwachen, ob das Ladesteuergerät des Fahrzeugs sich an die ausgehandelte Ladeleistung hält oder nicht. Im Falle einer Missachtung kann durch die Ladestation ein Abschalten des Ladestroms erfolgen.

Aus der internationalen Patentanmeldung WO 2011/012451 A1 ist bereits bekannt, den Ladestrom abhängig von der Temperatur des Ladekabels zu steuern. Mit Hilfe der Überwachung der Temperatur ist es gemäß dieses Standes der Technik möglich, alterungs- oder korrosionsbedingte Defekte innerhalb der Kabelgarnitur, welche das Elektrofahrzeug mit der Ladestation verbindet, zu kompensieren. Hierzu wird innerhalb der Steckervorrichtung, welche die Kabelgarnitur mit dem Elektrofahrzeug bzw. der Ladestation verbindet, ein Kodierungsmittel vorgesehen, mit dessen Hilfe der Wert der über das Ladekabel übertragbaren Stromstärke kodiert werden kann. Dieses Kodierungsmittel wird abhängig von einem Temperaturerfassungsmittel, insbesondere einem Widerstand, gesteuert, so dass ein temperaturkorrigierter Kodierungswert von dem Kodierungsmittel ausgegeben werden kann.

Die Temperatur in der Kabelgarnitur ist abhängig von der Stromstärke als auch dem Übertragungswiderstand der Kabelgarnitur bzw. des darin enthaltenen Energiekabels. Der Widerstand kann beispielsweise durch einen Defekt am Kabel oder Korrosion erhöht sein, was zu einer erhöhten Verlustleistung auf der Übertragungsstrecke führt. Diese erhöhte Verlustleistung führt zu einem Überhitzen des Kabels. Um dies zu verhindern, schlägt der Stand der Technik vor, den Stecker des Kabels so auszustatten, dass dieser verhindert, dass ein Überstrom zu einer temperaturbedingten Beschädigung des Kabels führt.

Mit Hilfe des aus dem Stand der Technik bekannten Verfahrens ist es möglich, die Ladeleistung temperaturabhängig zu reduzieren. Nicht möglich ist es jedoch, die Ladezeit durch ein Überhöhen des Ladestroms über einen Dauerstrom hinaus zu verkürzen. Mit Hilfe des aus dem Stand der Technik bekannten Steckers ist es lediglich möglich, eine Zerstörung eines Kabels durch Reduzierung der Verlustleistung zu verhindern. Ferner ist aus dem Dokument US 2012/277926 A1 ein Verfahren nach dem Oberbegriff des Anspruchs 1 bekannt. Somit lag dem Gegenstand die Aufgabe zugrunde, die Leistungsabgabe einer Ladestation über die Dauernennleistung hinaus zu erhöhen, ohne die elektrischen Komponenten in der Ladestation nachhaltig zu schädigen.

Diese Aufgabe wird durch ein Verfahren nach Anspruch 1 gelöst.

Um zu erreichen, dass die Ladezeit verkürzt wird, ist der Ladestrom bzw. die Ladeleistung möglichst hoch zu wählen. Eine Ladestation ist in der Regel für einen Dauerstrom ausgelegt, derart, dass bei dauerhafter Belastung der Ladestation mit diesem so bestimmten Dauerstrom keine Beschädigung an den elektrischen Bauteilen der Ladestation auftritt. Die Dauernennleistung ist bestimmt durch die Komponente/das Bauteil innerhalb der Ladestation, die sich am meisten aufheizt und somit das größte Gefährdungspotential für eine thermische Überlastung der Ladestation bildet.

In einer Ladestation, welche vorzugsweise eine kompakte Bauweise aufweist, sind eine Vielzahl von Komponenten verbaut, die jeweils für sich Verlustleistung produzieren. Diese Verlustleistung ist abhängig vom Ladestrom und führt zu einer Erhitzung der Ladestation als solcher. Wenn die Ladestation, wie vorzugsweise möglich, ohne aktive Kühlung auskommt, mithin lediglich eine passive Kühlung aufweist, kann ein Überhitzen einer Komponente eine Zerstörung der Ladestation zur Folge haben. Eine passive Kühlung erfolgt vorzugsweise ausschließlich über Konvektion, insbesondere über Abgabe thermischer Verlustleistung an die Umgebungsluft.

Dennoch ist auch bei diesen Ladestationen eine kurzzeitige Belastung über der Dauernennleistung möglich, ohne dass die Komponenten Schaden nehmen. Die mögliche Dauer dieser Überlastung hängt von verschiedenen Faktoren ab. Zum Einen spielt das Alter der Komponenten in der Ladestation eine Rolle, da die Verlustleistung regelmäßig mit steigendem Alter der Komponenten ansteigt. Zum Anderen kann beispielsweise auch die Umgebungstemperatur eine Rolle spielen, da die passive Kühlung der Ladestation maßgeblich abhängig von der Umgebungstemperatur ist.

Alles in Allem ist gegenständlich festgestellt worden, dass eine Ladeleistung zwischen Elektrofahrzeug und Ladestation ausgehandelt werden kann, die über der Dauernennleistung liegt.

Eine Maximalleistung, welche über der Dauernennleistung liegt, ist insbesondere durch die maximale Stromtragfähigkeit der Komponenten innerhalb der Ladestation bestimmt. Die Komponente, die die geringste Stromtragfähigkeit hat, bestimmt den Maximalstrom und somit die Maximalleistung.

Um die Ladedauer zu verkürzen, wird gegenständlich vorgeschlagen, zunächst eine über der Dauernennleistung liegende und maximal der Maximalleistung entsprechende Ladeleistung auszuhandeln. Nachdem diese Ladeleistung ausgehandelt wurde, lädt das Ladesteuergerät des Elektrofahrzeugs entsprechend der ausgehandelten Ladeleistung die Batterie des Elektrofahrzeugs.

Während des Ladens wird die Temperatur in der Ladestation überwacht. Hierzu kann ein NTC- oder PTC-Widerstand in der Ladestation angeordnet werden.

Räumlich wird der Temperatursensor vorzugsweise in einem oberen Drittel der Ladestation, insbesondere in den oberen 10% der Ladestation angeordnet sein, da dort regelmäßig die höchsten Temperaturen feststellbar sind. Auch ist es möglich, den Temperatursensor unmittelbar an den Komponenten oder dem Bauteil anzuordnen, das die höchste Verlustleistung hat oder das die größte Temperaturempfindlichkeit aufweist. Insbesondere ist es dies das Bauteil, das zuerst temperaturbedingt ausfallen wird, insbesondere bei einer überhöhten Temperatur. Die Maximaltemperatur kann diejenige Temperatur sein, bei der sichergestellt ist, dass keine der Komponenten ausfällt oder beschädigt wird. Insbesondere ist die Maximaltemperatur durch diejenige Komponente vorgegeben, die bei der geringsten Temperatur bereits ausfällt oder beschädigt wird.

Vorzugsweise wird in Abständen eine neue Ladeleistung ausgehandelt. Hierbei kann neben der aktuellen überwachten Temperatur auch das Alter einzelner Komponenten und/oder die Umgebungstemperatur in die Berechnung einfließen. Die Regelung erfolgt vorzugsweise derart, dass abhängig von der aktuellen Temperaturkurve, also z.B. der Abweichung der Temperatur von der Umgebungstemperatur, des Temperaturgradienten und/oder der Dauer der Abweichung der Temperatur von der Umgebungstemperatur sowie auch z.B. dem Alter zumindest einzelner Komponenten jeweils eine neue Ladeleistung ausgehandelt wird. Hierbei erfolgt die Regelung derart, dass ein Überschreiten der Maximaltemperatur möglichst dauerhaft vermieden wird. Die Regelung greift somit nicht erst dann ein, wenn die Maximaltemperatur erreicht ist, sondern bereits zuvor. Hierbei kommen P, PI und PID Regler zum Einsatz.

Darüber hinaus können verschiedene Komponenten verschiedene Temperaturausfallcharakteristika aufweisen. Insbesondere die Ausfallcharakteristika der sicherheitsrelevanten Komponenten, wie z.B. des FI Schalters oder des Steuergerätes werden bei der Regelung der Ladeleistung mit einer erhöhten Priorität berücksichtigt. Es wird stets die Ladeleistung ausgehandelt werden, bei der sichergestellt ist, dass die Maximaltemperatur nicht überschritten bzw. eine temperaturbedingte Beschädigung oder ein temperaturbedingter Ausfall einer vorzugsweise sicherheitsrelevanten Komponente vermieden wird.

Wird beim Überwachen der Temperatur in der Ladestation festgestellt, dass die Temperatur über einer ersten Grenztemperatur liegt, so wird eine neue Ladeleistung ausgehandelt, die maximal der Dauernennleistung entspricht. Vorzugsweise ist die neu ausgehandelte Ladeleistung unterhalb der Dauernennleistung, um ein Abkühlen der Ladestation zu bewirken, so dass nach dem Abkühlen zumindest mit Dauernennleistung vorzugsweise jedoch mit einer Leistung über der Dauernennleistung geladen werden kann. Die erste Grenztemperatur liegt vorzugsweise unterhalb der Maximaltemperatur. Hierdurch kann erreicht werden, dass im Fall dass die Temperatur nah an die Maximaltemperatur heranzeicht, also wenn sie die Grenztemperatur erreicht, z.B. 10% unterhalb der Maximaltemperatur liegt, ein erzwungenes Abregeln der Ladeleistung auf unterhalb der Dauernennleistung erfolgt.

Gemäß einem Ausführungsbeispiel wird vorgeschlagen, dass die Maximalleistung durch eine maximale Stromtragfähigkeit von elektrischen Bauteilen der Ladestation bestimmt ist. Wie bereits erwähnt, wird in der Ladestation in verschiedenen elektrischen Leistungsbauteilen eine Verlustwärme erzeugt. Diese Verlustwärme kann zu einer Beschädigung der Bauteile der Ladesäule führen. Die Verlustleistung und somit die Verlustwärme ist abhängig von der vom Fahrzeug entnommenen Leistung. Die Leistung wird unter anderem durch die Stromstärke bestimmt. Je höher die Stromtragfähigkeit einer Komponente ist, desto größer kann die Stromstärke des Stroms sein, der über diese Komponente fließt. Übersteigt die Stromstärke die Stromtragfähigkeit des Bauteils, so wird dieses zerstört. Diese Zerstörung kann unabhängig von der Verlustwärme sein.

Aus diesem Grunde ist die Maximalleistung zumindest durch die Stromtragfähigkeit der elektrischen Bauteile der Ladestation bestimmt. Das Bauteil, welches die geringste Stromtragfähigkeit hat, kann die Maximalleistung bestimmen. Daneben kann auch die aktuelle Temperatur relevant für die jeweils aushandelbare Maximalleistung sein. Regelmäßig wird von der Stromtragfähigkeit der die Maximalleistung bestimmenden Komponente ein Sicherheitsabstand eingehalten werden, der vorzugsweise 10%, besonders bevorzugt 20% unterhalb der maximalen Stromtragfähigkeit liegt. Dies stellt ein Sicherheitspuffer dar, um die Komponenten vor Zerstörung zu schützen.

Regelmäßig sind die Komponenten innerhalb der Ladestation so dimensioniert, dass deren Maximalleistung erheblich über deren Dauernennleistung liegt. Insbesondere sind die Komponenten so dimensioniert, dass sie erheblich höhere Temperaturen aushalten können, als diese bei Dauernennleistung auftreten. Somit wird vorgeschlagen, dass die Maximalleistung zwischen 50% und 100% der Dauernennleistung über der Dauernennleistung ist. Das bedeutet, dass die Ladestation regelmäßig das 1,5 bis 2-fache der Leistung zur Verfügung stellen kann, als dies durch die Dauernennleistung bestimmt ist. Jedoch führt diese erhöhte Leistung zu größerer Verlustwärme, so dass diese nicht dauerhaft zur Verfügung gestellt werden kann. Um ein kurzzeitiges Laden mit einer erhöhten Leistung zu ermöglichen, kann jedoch die Dauernennleistung überschritten werden.

Die Dauernennleistung ist vorzugsweise zwischen 22 kW und 44 kW. Betreibt man eine Ladestation mit einer über der Dauernennleistung liegenden Ladeleistung, so kann die Ladezeit verkürzt werden. Dadurch, dass vermieden wird, dass die Dauernennleistung der Ladestation erhöht werden muss, was zu einem erheblichen Mehrpreis der eingesetzten Komponenten führen würde, kann die bestehende Ladeinfrastruktur genutzt werden, um teilweise erheblich kürzere Ladezeiten zu realisieren.

Insbesondere ist erkannt worden, dass das Laden einer Batterie mit einer erhöhten Leistung für eine kurze Zeit den Ladezustand der Batterie erheblich verbessern kann. In den ersten 15 bis 30 Minuten eines Ladevorgangs wächst der Ladezustand einer leeren Batterie überproportional an, so dass beispielsweise nach 20 bis 30 Minuten Laden ein Ladezustand von 80% der Gesamtkapazität der Batterie erreicht werden kann, wohingegen für ein vollständiges Laden, d.h. für 100% der Ladekapazität ein Laden von 2 bis 4 Stunden notwendig ist. D.h., dass in den ersten 20 bis 30 Minuten ein Großteil der Kapazität der Batterie geladen ist und lediglich für die letzten 20% der Ladeleistung eine erheblich längere Ladedauer notwendig ist.

Wird festgestellt, dass die Temperatur oberhalb der Umgebungstemperatur und vorzugsweise unterhalb der Grenztemperatur oder der Maximaltemperatur liegt, so wird die Ladeleistung neu ausgehandelt. Abhängig vom Temperaturabstand der aktuellen Temperatur von der Grenztemperatur oder der Maximaltemperatur, dem zeitlichen Verlauf der Temperatur und dem Temperaturgradienten kann dann eine neue Ladeleistung ausgehandelt werden. Außerdem kann bei der Bestimmung der neu auszuhandelnden Ladeleistung auch das Alter von zumindest einzelnen Komponenten und/oder auch die temperaturabhängige Ausfallcharakteristik zumindest einzelnen Komponenten berücksichtigt werden. Je näher die Temperatur an die Grenztemperatur oder die Maximaltemperatur heranreicht, desto geringer wird wahrscheinlich die auszuhandelnde Ladeleistung sein.

Auch wird vorgeschlagen, wie bereits erwähnt, dass die neu ausgehandelte Ladeleistung auch unterhalb der Dauernennleistung liegen kann. Dies führt dazu, dass die Ladestation schneller abkühlen kann und vorzugsweise bei einem Unterschreiten eines unteren Grenzwertes die Ladeleistung erneut neu ausgehandelt werden kann. Durch Vorsehen eines oberen und eines unteren Temperaturgrenzwertes kann eine Hysterese der auszuhandelnden Ladeleistung realisiert werden.

Die Regelung der Ladeleistung kann mittels eines P-, eines PI- oder PID-Reglers erfolgen. Abhängig von dem gewählten Regler kann ein Schwingen der gemessenen Ist-Temperatur gedämpft werden. Auch kann durch eine entsprechende Regelung das Überschreiten der Maximaltemperatur verhindert werden.

Die Ladeleistung wird vorzugsweise zu Beginn eines Ladevorgangs zunächst ausgehandelt. Während das Elektrofahrzeug mit der Ladeinfrastruktur, insbesondere der Ladestation verbunden ist, kann vorzugsweise die Ladeleistung ständig neu ausgehandelt werden, insbesondere kann ständig signalisiert werden, wie hoch die maximal zur Verfügung stehende Ladeleistung ist. Diese Signalisierung bzw. die maximal zur Verfügung stehende Ladeleistung kann während eines laufenden Ladevorgangs regelmäßig angepasst werden. Ständig kann in diesem Zusammenhang in Abständen, vorzugsweise in regelmäßigen Abständen, beispielsweise einmal pro Minute, pro 5 Minuten, pro Viertelstunde und dergleichen bedeuten.

Die Signalisierung der Ladeleistung kann über die Kabelgarnitur zwischen Elektrofahrzeug und Ladestation erfolgen. Insbesondere kann ein Pilotleiter der Kabelgarnitur hierzu verwendet werden. Andererseits ist es auch möglich, dass auf den Energieleiter der Kabelgarnitur das Signal die Ladeleistung betreffend aufmoduliert werden kann.

Insbesondere erfolgt die Signalisierung der Ladeleistung mittels eines pulsweitenmodulierten(PWM) Signals. Auch kann die Ladeleistung nach dem CHADEMO Protokoll oder mittels Power Line Communication (PLC) insbesondere nach IEC 15118 Standard erfolgen. Andere Arten der Kommunikation bzw. des Kommunikationsprotokolls sind ebenfalls möglich und umfasst.

Neben der Temperaturüberwachung kann eine Zeitüberwachung vorgesehen werden. Hierbei ist es möglich, dass die über der Dauernennleistung liegende Ladeleistung nur für eine bestimmte Zeit, die vorbestimmt sein kann, liegen darf. Somit ist es möglich, dass nach einer bestimmten Zeit der über der Dauernennleistung liegenden Ladeleistung eine neue, maximal der Dauernennleistung entsprechende Ladeleistung ausgehandelt wird. Hierdurch wird verhindert, dass durch eine dauerhafte Ladeleistung über der Dauernennleistung eine Beschädigung der Komponenten auftritt, die unabhängig von der Temperatur der Komponenten ist.

Bei Ladestationen ist es möglich, dass mehr als ein Elektrofahrzeug anschließbar ist. Für jeden Anschlusspunkt innerhalb einer Ladestation ist eine gesamte Ladeinfrastruktur in der Ladestation vorzusehen. Um die Maximalleistung gleichmäßig auf die verschiedenen Ladepunkte der Ladestation verteilen zu können, ist die Zeitüberwachung ebenfalls relevant. Somit wird verhindert, dass an einem Ladepunkt für eine längere Zeit die Maximalleistung bezogen wird, so dass an dem anderem Ladepunkt beispielsweise nur ganz kurz oder überhaupt nicht eine Ladeleistung bezogen werden kann, die über der Dauernennleistung liegt.

Sobald die Temperatur innerhalb der Ladestation gesunken ist, insbesondere unter einer unteren Grenztemperatur, kann eine neue, über der Dauernennleistung liegende und maximale der Maximalleistung entsprechende Ladeleistung ausgehandelt werden.

Die zuvor genannten Verfahren können auch als Computerprogramm oder als auf einem Speichermedium gespeichertes Computerprogramm realisiert werden. Hierbei kann ladestationsseitig und/oder fahrzeugseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein schematisches Blockschaltbild für den Aufbau eines Systems aus einem Elektrofahrzeug und einer über das Ladekabel damit verbundenen Ladestation;
- Fig. 2: ein schematisches Blockschaltbild einer Ladeinfrastruktur innerhalb einer Ladestation;
- Fig. 3: den Verlauf einer Ladekurve abhängig von einer Ladeleistung einer Batterie eines Elektrozeugs;
- Fig. 4: den Ablauf eines gegenständlichen Verfahrens.

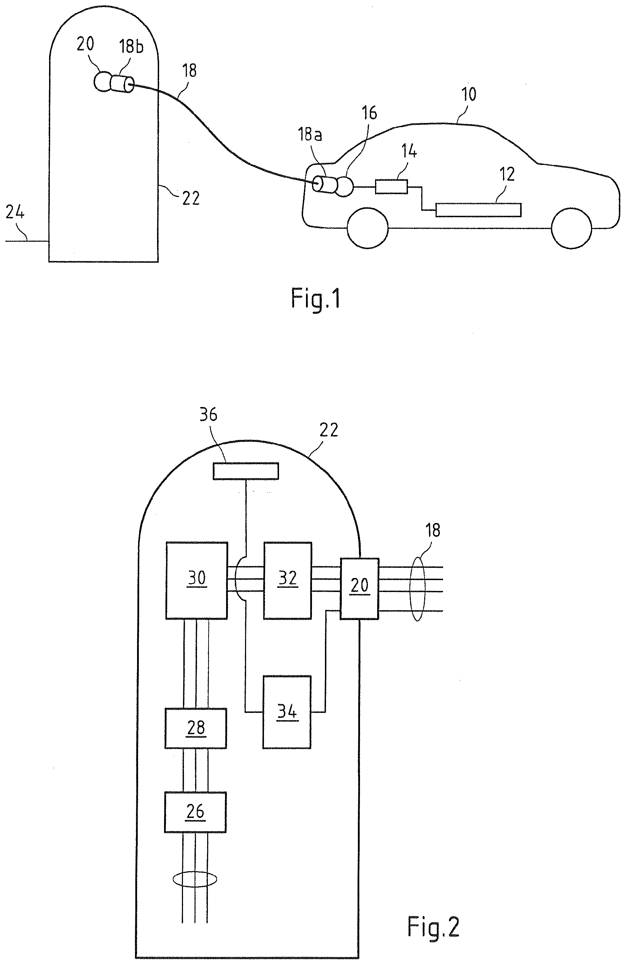

In Fig. 1 ist ein Elektrofahrzeug 10 dargestellt, welches eine Batterie 12 aufweist. Die Batterie 12 wird vorzugsweise über ein Ladesteuergerät 14 aufgeladen, wobei das Ladesteuergerät 14 über einen Elektroanschluss 16 und ein Ladekabel 18 an einem Anschluss 20 der Ladestation 22 angeschlossen ist. Das Ladekabel 18 weist an beiden Enden jeweils eine Steckvorrichtung 18a, 18b auf, wobei jede Steckvorrichtung 18a, 18b einen Stecker bzw. eine Buchse aufweist, welche mit dem entsprechenden Anschluss 16, 20 des Elektrofahrzeugs 10 bzw. der Ladestation 22 anschließbar sind.

Die Ladestation 22 ist mit einem Energieversorgungsnetz 24 verbunden und weist intern eine Ladeinfrastruktur auf, wie sie nachfolgend im Zusammenhang mit Fig. 2 näher erläutert werden wird.

Das Ladekabel 18 weist Leistungsleitungen, z.B. L1, L2, L3, N, PE für den Ladestrom, der über das Ladekabel 18 von der Ladestation 22 an das Elektrofahrzeug 10 fließt, auf. Darüber hinaus kann in dem Ladekabel 18 mindestens eine Pilotsignalleitung zur Übertragung von Pilotsignalen vorgesehen sein. Außerdem kann eine sogenannte Plug-Present-Leitung vorgesehen sein, mit deren Hilfe das Elektrofahrzeug 10 der Ladestation 22 anzeigen kann, ob ein Stecker eingesteckt ist oder nicht.

Die Ladeinfrastruktur innerhalb der Ladestation 22 ist in Fig. 2 dargestellt. Zu erkennen ist, dass die Ladestation 22 beispielsweise 3-phasig an das Energieversorgungsnetz 24 angeschlossen ist. Darstellt sind die 3-Phasen L1, L2, L3, nicht dargestellt ist der NULL Leiter N sowie der Erdungsleiter PE.

Die drei Phasen L1, L2, L3 werden zunächst über einen Zähler 26 an einen FI-Schalter 28 angeschlossen. Der FI-Schalter 28 ist mit einem Sicherungsautomat 30 verbunden. Der Ausgang des Sicherungsautomaten 30 ist mit einem Schütz 32 verbunden, dessen Ausgang in dem Anschluss 20 mündet. Innerhalb der Ladestation 22 ist darüber hinaus ein Ladesteuergerät 34 vorgesehen, über das der Schütz 32 ansteuerbar ist. Das Ladesteuergerät 34 kann somit über den Schütz 32 den Ladestrom zu- und abschalten.

Ein Ausgang des Ladesteuergeräts 34 kann zur Signalisierung der Ladeleistung verwendet werden, insbesondere kann dieser Ausgang mit einem Pilotleiter des Kabels 18 verbunden sein. Über diesen Pilotleiter kann beispielsweise mittels eines PWM-Signals eine Ladeleistung mit dem Ladesteuergerät 14 des Elektrofahrzeugs 10 ausgehandelt werden.

Jede Komponente 26-32 innerhalb der Ladestation 22, insbesondere der Zähler 26, der FI-Schalter 28, der Sicherungsautomat 30, der Schütz 32 und das Ladesteuergerät 34 weist eine eigene Temperaturbeständigkeit auf. Überschreitet die Temperatur innerhalb der Ladestation 22 eine Maximaltemperatur, so kann zumindest einer dieser Komponenten 26-32 beschädigt werden.

Die Temperaturbeständigkeit der Komponenten 26-32 kann unterschiedlich sein, so dass eine Maximaltemperatur innerhalb der Ladestation 22 durch die Komponente bestimmt sein kann, deren Temperaturbeständigkeit am geringsten ist.

Darüber hinaus weist jede Komponente 26, 28, 30, 32 eine maximale Stromtragfähigkeit auf. Diese Stromtragfähigkeit bestimmt, wie hoch ein Strom über diese Komponente 26-32 sein kann, ohne dass diese durch den Strom selbst beschädigt wird. Diese Beschädigung kann unabhängig von der Temperatur sein.

Die Stromtragfähigkeit kann dazu genutzt werden, eine Maximalleistung der Ladestation 22 zu bestimmen. Die durch die Stromtragfähigkeit der Komponenten 26-32 bestimmte Maximalleistung liegt regelmäßig über der Dauernennleistung, die in der Regel durch die Temperaturbeständigkeit der Komponenten 26-32 bestimmt ist.

Eine Temperatur innerhalb der Ladestation 22 kann durch einen Temperatursensor 36, insbesondere einen PTC- oder ein NTC-Widerstand erfasst werden. Die erfasste Temperatur wird dem Ladesteuergerät 34 zugeführt. Das Ladesteuergerät 34 kann abhängig von der erfassten Temperatur die Ladeleistung mit dem Elektrofahrzeug 10 bzw. dem Ladesteuergerät 14 des Elektrofahrzeugs 10 aushandeln.

Zu erkennen ist, dass der Temperatursensor 36 in einem oberen Bereich, insbesondere in den oberen 10% der Ladestation 22 angeordnet ist. Die Verlustwärme der Komponenten 26-34 wird durch diese an die Umgebungsluft abgegeben. Innerhalb der Ladestation 22 steigt die so erwärmte Luft nach oben, so dass im Bereich des Temperatursensors 36 bzw. im oberen Bereich der Ladestation 22 die höchste Temperatur gemessen werden wird.

Es ist jedoch auch möglich, dass an jeder Komponente 26-34 ein eigener Temperatursensor 36 vorgesehen ist, womit eine individuellere Überwachung der Temperatur möglich ist und es beispielsweise möglich sein kann, die Maximalleistung für einen längeren Zeitraum zur Verfügung zu stellen, da die jeweiligen Komponenten 26-34 für sich genommen noch nicht ihre Maximaltemperatur erreicht haben.

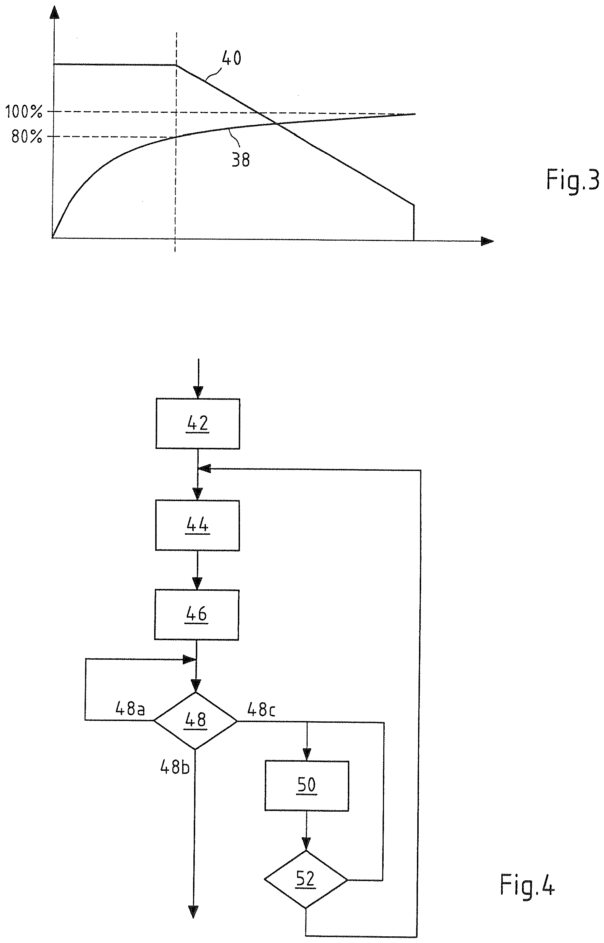

Gegenständlich ist erkannt worden, dass der Ladezustand einer Batterie 12 zu Beginn eines Ladevorgangs erheblich schneller verbessert werden kann, als zum Ende des Ladevorgangs. Insbesondere ist es möglich, durch eine sehr hohe Ladeleistung zu Beginn eines Ladevorgangs den Ladezustand (SOC) der Batterie 14 in kurzer Zeit auf bis zu 70-80% der Gesamtkapazität zu bringen. Dies ist beispielhaft in Fig. 3 dargestellt.

Fig. 3 zeigt den Verlauf des Ladezustands der Batterie 12 in Kurve 38 und den Verlauf der Ladestromstärke in Kurve 40. Die Ordinate zeigt den Ladestrom bzw. den Ladezustand und die Abzisse die Zeit.

In Fig. 3 ist zu erkennen, dass der Ladezustand der Batterie 12 sich mit zunehmender Zeit 100% annähert. Andererseits ist zu erkennen, dass zu Beginn eines Ladevorgangs der Ladezustand überproportional ansteigt und der Ladezustand von 80% sehr schnell erreicht werden kann. Um dieses überproportionale Ansteigen des Ladezustands zu begünstigen, sollte die Ladestromstärke zu Beginn eines Ladevorgangs möglichst groß gewählt werden. Dies ist durch die Linie 40 dargestellt. Bei der Verwendung eines gegenständlichen Verfahrens ist die Ladestromstärke zu Beginn des Ladevorgangs größer als dies durch die Dauernennleistung der Ladestation 22 ermöglicht wäre. Nach kurzer Zeit, beispielsweise 30 Minuten wird die Ladestromstärke abgesenkt. Überschreitet die Temperatur innerhalb der Ladestation 22 ein Grenzwert, so kann ein Absenken der Ladestromstärke bereits vorher erfolgen.

Fig. 4 zeigt den Ablauf eines gegenständlichen Verfahrens.

Zunächst wird das Elektrofahrzeug 10 über das Kabel 18 mit der Ladestation 22 verbunden (42).

Nachdem die elektrische Verbindung getestet wurde, wird zwischen dem Ladesteuergerät 14 und dem Ladesteuergerät 34 über dem Pilotleiter mittels eines pulsweitenmodulierten Signals eine Ladeleistung ausgehandelt (44). Diese zunächst ausgehandelte Ladeleistung liegt dabei über der Dauernennleistung, welche für die Ladestation 22 spezifiziert ist. Nachdem die Ladeleistung ausgehandelt (44) wurde, wird der Ladestrom durch das Ladesteuergerät 34 durch ein Befehl an das Schütz 32 freigegeben (46).

Das Schütz 32 schließt und über die Leitungen des Kabels 18 fließt der Ladestrom über das Ladesteuergerät 14 des Elektrofahrzeugs 10 zu der Batterie 12. Anschließend wird zweierlei überwacht. Durch das Ladesteuergerät 34 wird mittels des Temperatursensors 36 überwacht, ob die Temperatur innerhalb der Ladestation 22 einen Grenzwert überschreitet. Darüber hinaus wird überwacht, ob der Ladestrom bzw. die Ladeleistung, welche über das Kabel 18 übertragen wird, der ausgehandelten Ladeleistung entspricht. Dieses Überwachen erfolgt in Schritt 48.

Liegt die Temperatur unterhalb der Grenztemperatur oder der Maximaltemperatur und wird die ausgehandelte Ladeleistung nicht überschritten, so wird gemäß Ablauf 48a die Überwachung 48 fortgesetzt.

Überschreitet die Ladeleistung die ausgehandelte Ladeleistung, so wird entsprechend Schritt 48b der Ladevorgang beendet, in dem das Ladesteuergerät 34 das Schütz 32 öffnet.

Steigt die Temperatur innerhalb der Ladestation 22, und vergrößert sich der Abstand der Ist-Temperatur von der Umgebungstemperatur, kann entsprechend der Anweisung 48c eine neue Ladeleistung zwischen Ladesteuergerät 34 und Ladesteuergerät 14 ausgehandelt (50). Die Regelung der auszuhandelnden Ladeleistung kann über einen P- PI oder PID Regler erfolgen.

Anschließend wird die Temperatur innerhalb der Ladestation 22 überwacht (52). Liegt die Temperatur weiterhin über der Umgebungstemperatur, so wird zurück zu Schritt 50 verzweigt und gegebenenfalls eine niedrigere oder auch höhere Ladeleistung ausgehandelt.

Ist die Temperatur unterhalb der Umgebungstemperatur, so wird zu Schritt 44 verzweigt und es wird erneut eine neue Ladeleistung ausgehandelt, die gegebenenfalls über der Dauernennleistung liegen kann.

Mit Hilfe des gegenständlichen Verfahrens ist es möglich, die Ladezeit für das Laden eines Elektrofahrzeugs erheblich zu verkürzen, ohne dass die Komponenten innerhalb einer Ladestation für höhere Leistungen ausgelegt werden müssen. Dies führt zu einer effizienteren Nutzung bestehender Ladeinfrastruktur.

## Patentansprüche

1. Verfahren zum Betreiben einer Ladestation (22) für Elektrofahrzeuge 10), bei dem
- eine Ladeleistung zwischen einem Ladesteuergerät (14) des Elektrofahrzeugs und der Ladestation ausgehandelt wird, und
- das Ladesteuergerät entsprechend der ausgehandelten Ladeleistung einen von der Ladestation an das Elektrofahrzeug übertragenen Ladestrom steuert, wobei
- eine Dauernennleistung und eine Maximalleistung der Ladestation, die größer als die Dauernennleistung ist, bestimmt ist,
**dadurch gekennzeichnet,**
- **dass** zunächst eine über der Dauernennleistung liegende und maximal der Maximalleistung entsprechende Ladeleistung ausgehandelt wird,
- **dass** die Temperatur in der Ladestation überwacht wird, und
- **dass** abhängig von der Temperatur eine neue Ladeleistung ausgehandelt wird.

2. Verfahren nach Anspruch 1, **dadurch gekennzeichnet, dass** bei einem Überschreiten einer Grenztemperatur eine neue Ladeleistung ausgehandelt wird, die maximal der Dauernennleistung entspricht.

3. Verfahren nach Anspruch 1 oder 2, **dadurch gekennzeichnet, dass** die Maximalleistung durch eine maximale Stromtragfähigkeit von elektrischen Bauteilen der Ladestation bestimmt ist.

4. Verfahren nach einem der vorangehenden Ansprüche, **dadurch gekennzeichnet, dass** die Maximalleistung zwischen 50% und 100% der Dauernennleistung über der Dauernennleistung ist, wobei die Dauernennleistung vorzugsweise zwischen 22kW und 44kW ist.

5. Verfahren nach einem der vorangehenden Ansprüche, **dadurch gekennzeichnet, dass** die neu ausgehandelte Ladeleistung unterhalb der Dauernennleistung ist.

6. Verfahren nach einem der vorangehenden Ansprüche, **dadurch gekennzeichnet, dass** die Ladeleistung abhängig von der Temperatur in der Ladestation geregelt wird, wobei die Regelung durch einen P-Regler proportional, durch einen PI-Regler proportional und integral oder durch einen PID-Regler proportional, integral und differential erfolgt.

7. Verfahren nach einem der vorangehenden Ansprüche, **dadurch gekennzeichnet, dass** die Ladeleistung zu Beginn eines Ladevorgangs und/oder mehrfach neu während eines Ladevorgangs ausgehandelt wird.

8. Verfahren nach einem der vorangehenden Ansprüche, **dadurch gekennzeichnet, dass** die Ladeleistung über einen Pilotleiter oder einen Energieleiter in der die Ladestation mit dem Elektrofahrzeug verbindenden Kabelgarnitur ausgehandelt wird.

9. Verfahren nach einem der vorangehenden Ansprüche, **dadurch gekennzeichnet, dass** nach einer bestimmten Zeit der über der Dauernennleistung liegenden Ladeleistung eine neue, maximal der Dauernennleistung entsprechende Ladeleistung ausgehandelt wird.

10. Verfahren nach einem der vorangehenden Ansprüche, **dadurch gekennzeichnet, dass** bei einem Unterschreiten einer Grenztemperatur einer neue, über der Dauernennleistung liegenden und maximal der Maximalleistung entsprechende Ladeleistung ausgehandelt wird.

## Claims

1. Method for operating a charging station (22) for electric vehicles (10), in which
- a charging power is negotiated between a charge control device (14) of the electric vehicle and the charging station and
- the charge control device controls a charging current which is transmitted from the charging station to the electric vehicle in accordance with the charging power negotiated,
- wherein a continuous power rating and a maximum power of the charging station which is greater than the continuous power rating are determined,
**characterised in that**
- a charging power which is above the continuous power rating and which at most corresponds to the maximum power is first negotiated,
- **in that** the temperature in the charging station is monitored, and
- **in that** a new charging power is negotiated in accordance with the temperature.

2. Method according to Claim 1, **characterised in that**, upon exceeding a limit temperatur, a new charging power which at most corresponds to the continuous power rating is negotiated.

3. Method according to Claim 1 or 2, **characterised in that** the maximum power is determined by means of a maximum current-carrying capacity of electrical components of the charging station.

4. Method according to any one of the preceding claims, **characterised in that** the maximum power is between 50% and 100% of the continuous power rating above the continuous power rating, wherein the continuous power rating is preferably between 22 kW and 44 kW.

5. Method according to any one of the preceding claims, **characterised in that** the renegotiated charging power is below the continuous power rating.

6. Method according to any one of the preceding claims, **characterised in that** the charging power is controlled in accordance with the temperature in the charging station, wherein the control is carried out by means of a P controller in a proportional manner, by means of a PI controller in a proportional and integral manner or by means of a PID controller in a proportional, integral and differential manner.

7. Method according to any one of the preceding claims, **characterised in that** the charging power is negotiated at the beginning of a charging operation and/or several times again during a charging operation.

8. Method according to any one of the preceding claims, **characterised in that** the charging power is negotiated by means of a pilot conductor or an energy conductor in the cable set which connects the charging station to the electric vehicle.

9. Method according to any one of the preceding claims, **characterised in that**, after a specific period of time of the charging power which is above the continuous power rating, a new charging power which at most corresponds to the continuous power rating is negotiated.

10. Method according to any one of the preceding claims, **characterised in that**, upon undercutting a limit temperature, a new charging power which is above the continuous power rating and which at most corresponds to the maximum power is negotiated.

## Revendications

1. Procédé pour faire fonctionner une borne de recharge (22) prévue pour des véhicules électriques (10), procédé dans lequel
- une puissance de charge est délivrée entre un appareil de commande de charge (14) du véhicule électrique, et la borne de recharge, et
- l'appareil de commande de charge, de façon correspondant à la puissance de charge délivrée, pilote un courant de charge transmis au véhicule électrique par la borne de recharge, où
- une puissance nominale permanente et une puissance maximale de la borne de recharge sont déterminées, la puissance maximale étant supérieure à la puissance nominale permanente,
**caractérisé**
- **en ce qu'**une puissance de charge, qui est supérieure à la puissance nominale permanente et qui correspond au maximum à la puissance maximale, est d'abord délivrée,
- **en ce que** la température dans la borne de recharge est surveillée, et
- **en ce qu'**une nouvelle puissance de charge est délivrée en fonction de la température.

2. Procédé selon la revendication 1, **caractérisé en ce qu'**une nouvelle puissance de charge est délivrée en cas de dépassement de la limite supérieure d'une température limite, puissance de charge qui correspond au maximum à la puissance nominale permanente.

3. Procédé selon la revendication 1 ou 2, **caractérisé en ce que** la puissance maximale est déterminée par une capacité de charge de courant maximale de composants électriques de la borne de recharge.

4. Procédé selon l'une quelconque des revendications précédentes, **caractérisé en ce que** la puissance maximale est comprise entre 50 % et 100 % de la puissance nominale permanente, au-dessus de la puissance nominale permanente, où la puissance nominale permanente est comprise de préférence entre 22 kW et 44 kW.

5. Procédé selon l'une quelconque des revendications précédentes, **caractérisé en ce que** la puissance de charge venant d'être délivrée est inférieure à la puissance nominale permanente.

6. Procédé selon l'une quelconque des revendications précédentes, **caractérisé en ce que** la puissance de charge est régulée en fonction de la température dans la borne de recharge, où la régulation est effectuée de façon proportionnelle par un régulateur P, de façon proportionnelle et intégrale par un régulateur PI ou de façon proportionnelle, intégrale et différentielle par un régulateur PID.

7. Procédé selon l'une quelconque des revendications précédentes, **caractérisé en ce que** la puissance de charge est délivrée au début d'un processus de charge et/ou à plusieurs reprises au cours d'un processus de charge.

8. Procédé selon l'une quelconque des revendications précédentes, **caractérisé en ce que** la puissance de charge est délivrée par un conducteur pilote ou par un conducteur d'énergie qui se trouve parmi les accessoires pour câbles reliant la borne de recharge, au véhicule électrique.

9. Procédé selon l'une quelconque des revendications précédentes, **caractérisé en ce qu'**une nouvelle puissance de charge correspondant au maximum à la puissance nominale permanente est délivrée après un laps de temps déterminé où la puissance de charge se situe au-dessus de la puissance nominale permanente.

10. Procédé selon l'une quelconque des revendications précédentes, **caractérisé en ce qu'**une nouvelle puissance de charge, qui est supérieure à la puissance nominale permanente et qui correspond au maximum à la puissance maximale, est délivrée en cas de dépassement de la limite inférieure d'une température limite.
